# EUROPEAN PATENT APPLICATION

(11) **EP 1 775 232 A2**
(43) Date of publication of application: **18.04.2007**
(21) Application number: 06380267.2
(22) Date of filing: 16.10.2006
(51) Int. Cl.: B65D 51/16, A47J 47/06

(54) **Cap for containers with valve for controlling excess pressure**

(30) Priority: 17.10.2005 ES 200502263 U
(71) Applicant: Dual Coffee System S.L., 01015 Vitoria - Gasteiz (ES)
(72) Inventor: Lafuente Urquiza, Ignacio, 01139 Sarria (Alava) (ES)
(74) Representative: Carvajal y Urquijo, Isabel

(57) **Abstract**

The present invention relates to a valve for controlling excess pressure, comprising a body (1) in an upside-down cup shape, on the bottom of which it incorporates an outer recess (5) with a small opening on the bottom for communicating with the inside of the cap. A disc-shaped piece (9) is housed in this recess, between which piece and the bottom of the recess there is arranged a flexible stopping disc (14) blocking the opening (7) of the bottom of the recess (5), this disc-shaped piece being provided with openings allowing communication with the outside when the pressure inside the container deforms the stopping disc.

## Description

### OBJECT OF THE INVENTION

The present invention relates to a cap for containers, such as for example containers intended for coffee, containers for which a hermetic seal in an in-out direction is required, i.e. the type of container in which air cannot be let in from the outside but containers in which however it is desirable to control the internal pressure such that the pressure does not exceed a pre-established value.

Therefore the object of the invention is to obtain a cap which, when duly coupled to the corresponding container, allows at certain times an automatic discharge of a possible excess pressure produced inside said container, maintaining a hermetic seal the rest of the time.

### BACKGROUND OF THE INVENTION

In containers intended for maintaining certain products, as is the case of coffee, a hermetic seal is required on one hand to prevent the coffee from being contaminated with outside odors and on the other hand to prevent the loss of its own aroma. However, if this seal is hermetic, it means that at certain times, for example due to temperature, excess pressure is generated inside the container which may be damaging to the product therein.

The applicant is not aware of the current existence of a cap provided with a valve for controlling excess pressure, which allows evacuating a possible excess pressure inside the container, maintaining the hermetic seal for the rest of the time.

### DESCRIPTION OF THE INVENTION

The cap for containers with a valve for controlling excess pressure proposed by the invention fills this existing technical void, providing the container with the repeatedly mentioned features.

To that end and more specifically, the proposed cap with any suitable conventional structure, such as for example with a perimetral skirt provided with a coupling thread for coupling it to the container, and a perimetral groove for coupling a gasket assuring the hermetic seal, focuses its features on the incorporation of a preferably cylindrical outer recess provided with a small opening at the bottom for communicating between the inside and outside of the cap, provided on its side surface with a plurality of ribs in the direction of its generatrices, and also provided on the bottom with a perimetral rib such that a disc-shaped piece can be tightly coupled in said recess specifically under pressure, which piece in turn has three openings, a central opening for fixing a stopping disc with a flexible elastic nature provided for that purpose with a pivot that can be introduced in said opening, and two other diametrically opposed side openings that are isolated from the central opening of the cap by the mentioned stopping disc which is housed in a small undercutting of the disc-shaped piece.

Complementary to each of the side openings of the disc-shaped piece a channel emerges which is directed towards the center of the piece, being interrupted before reaching the opening for fixing the pivot of the stopping disc, such that these channels allow certain deformation of said stopping disc due to excess pressure of the container with the subsequent outlet of air through the end openings of the disc-shaped piece, whereas against external pressure, the valve assembly is maintained permanently closed.

Therefore and according to the object of the invention, the stopping disc keeps the cap permanently closed, i.e. it keeps said cap in hermetic seal conditions except when excess pressure occurs inside the container that is able to overcome the resistance to deformation of the stopping disc, at which time a singular and controlled discharge of air occurs until the pressure inside the container drops to the pre-established level.

### DESCRIPTION OF THE INVENTION

To complement the description being made and for the purpose of aiding to better understand the features of the invention according to a preferred practical embodiment thereof, a set of drawings is attached as an integral part of said description in which the following is shown with an illustrative and non-limiting character:
Figure 1 shows a side and diametrical section elevational view of a cap for containers with a valve for controlling excess pressure carried out according to the object of the present invention.
Figure 2 shows a lower plan view of the disc-shaped piece collaborating in the cap of the previous figure.
Figure 3 shows a diametrical section view of the disc-shaped piece represented in the previous figure.
Figure 4 shows another diametrical section view of the same piece, in this figure from a sectional plane perpendicular to that of the previous figure.

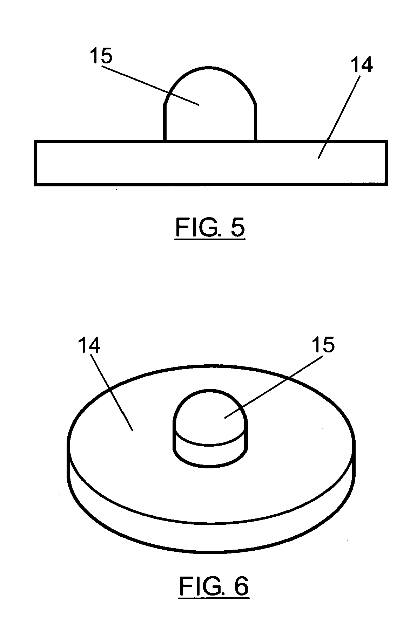

Figure 5 shows a side elevational view of the stopping disc collaborating with the disc-shaped piece of Figures 2 to 4.
Figure 6 finally shows a perspective view of the same stopping disc.

### PREFERRED EMBODIMENT OF THE INVENTION

In view of the indicated figures, it can be observed how the cap proposed by the invention comprises, like any other conventional cap, a body (1) like an upside-down cup, with a perimetral skirt (2) provided with internal threading (3) for the coupling thereof to the complementary container and with an inner perimetral groove (4) intended for the assembly therein of a sealing gasket which, in the sealed position, acts on the mouth of the container to obtain a hermetic seal.

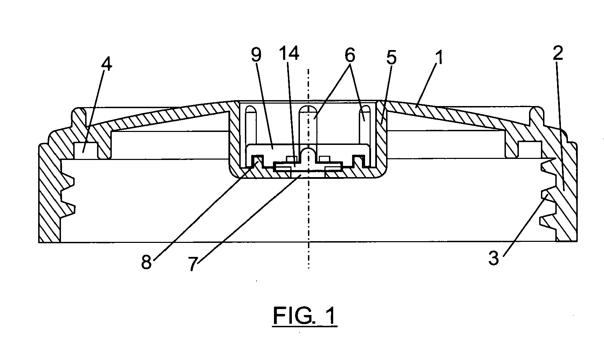

According to the invention the cap (1) incorporates in the center a cylindrical recess (5) which preferably adopts the centered arrangement of Figure 1 but which can adopt any other arrangement considered appropriate, which recess (5) is provided on its side face with ribs (6), arranged in the direction of its generatrices, preferably with a half-round profile, provided on the bottom with a central opening (7) for communicating with the inside of the cap, i.e. with the inside of the container, and a perimetral rib (8) on said bottom, the side ribs (6) being intended to tightly receive under pressure a disc-shaped piece (9), which is thus fixed inside the recess (5), which piece incorporates a lower perimetral groove (10) for the tongue and groove coupling thereof to the rib (8) of the bottom of the housing (5), and with three small through openings, a central opening (11) and two side openings (12) connected to one another by means of a lower circular undercutting (13) intended for tightly housing a stopping disc (14) made of a flexible elastic material provided with a cylindrical lug (15) through which said stopping disc (14) is detachably and hermetically fixed to the opening (11) of the disc-shaped piece (9), while at the same time said stopping disc (13) physically isolates or separates the openings (12) of the disc-shaped piece (9) and the opening (7) of the cap (1) itself, the one arranged on the bottom of the recess (5).

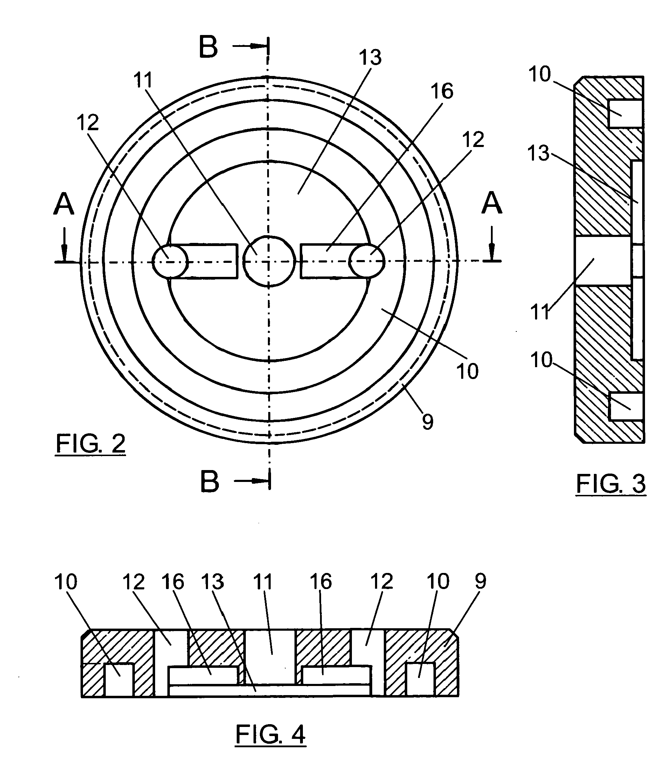

Complementarily arranged between the mentioned end openings (12) of the disc-shaped piece (9) are respective lower channels (16), which are interrupted before reaching the opening (11), as can especially be observed in Figure 4 such that these channels (16) allow certain deformation of the stopping disc (13) when the pressure inside the container exceeds a pre-established value, an instant outward discharge of air occurring through the mentioned openings (12) but the hermetic seal normally determined by the cap with respect to the body of the container being recovered immediately.

## Claims

1. A cap for containers with a valve for controlling excess pressure of the type comprising a body like an upside-down cup with an inner threading for the coupling thereof to the container and with a perimetral groove for arranging a sealing gasket, **characterized in that** it incorporates in any suitable location of its body, preferably in its middle area, an outer undercutting with a cylindrical structure, with a small opening on the bottom for communicating with the inside of the cap where a disc-shaped piece is stably housed, a stopping disc being located between said disc-shaped piece and the bottom of the undercutting, which disc rests on the opening of the bottom of said undercutting, blocking it, the disc-shaped piece having side openings allowing communication with the outside of the central opening of the undercutting when the pressure inside the container deforms the stopping disc.

2. - A cap for containers with a valve for controlling excess pressure according to claim 1, **characterized in that** the recess of the body of the cap incorporates means in its side wall, in the direction of its generatrices, intended for supporting the perimeter of the disc-shaped piece and on the bottom incorporates a perimetral ring-shaped rib receiving the disc-shaped piece through an also perimetral groove the latter is provided with.

3. - A cap for containers with a valve for controlling excess pressure according to the previous claims, **characterized in that** the stopping disc is integral with the disc-shaped piece, for which purpose said disc has an axial pivot which is inserted under pressure in an also axial opening of the disc-shaped piece, said stopping disc being made of a deformable elastic material.

4. - A cap for containers with a valve for controlling excess pressure according to the previous claims, **characterized in that** the disc-shaped piece has in addition to the central opening for the coupling of the stopping disc two diametrically opposed side openings connected to one another by means of a lower circular undercutting of said disc-shaped piece where said stopping disc is housed, and a pair of channels further being arranged which, from the mentioned side openings, are directed towards the surrounding areas of the central opening and which are opened towards the housing of the stopping disc, which channels allow the deformation of said stopping disc due to excess pressure inside the container to temporarily communicate the side openings of the disc-shaped piece with the central opening of the undercutting of the cap.
